Europäisches Patentamt

European Patent Office

Office européen des brevets

(19)

(11) Numéro de publication: **0 115 716**
**A1**

(12) # DEMANDE DE BREVET EUROPEEN

(21) Numéro de dépôt: **83402313.7**

(22) Date de dépôt: **01.12.83**

(51) Int. Cl.³: **G 05 D 23/12**

(30) Priorité: **02.12.82 FR 8220181**

(43) Date de publication de la demande: **15.08.84**
**Bulletin 84/33**

(84) Etats contractants désignés: **CH DE GB IT LI SE**

(71) Demandeur: **SAUNIER DUVAL EAU CHAUDE CHAUFFAGE S.D.E.C.C. - Société anonyme, 6, rue Lavoisier, F-93103 Montreuil (FR)**

(72) Inventeur: **Carouge, Jean, Rue des Carolines Millancourt en Ponthieu, F-80100 Abbeville (FR)**
Inventeur: **Breuvry, Michel, Rue Verte Hautvillers-Ouville, F-80100 Abbeville (FR)**

(74) Mandataire: **Lhuillier, René, 6, rue Lavoisier Boîte Postale no. 89, F-93104 Montreuil Cédex (FR)**

(54) **Robinet de réglage notamment pour radiateurs d'une installation de chauffage central.**

(57) L'invention se rapporte aux robinets de réglage destinés à équiper les radiateurs d'une installation de chauffage central.

Le robinet de réglage comporte une douille (7) qui se prolonge vers le haut par des pattes verticales (30) uniformément réparties sur le pourtour de ladite douille et supportant une résistance électrique (27) variable actionnée par un organe de commande solidaire d'un volant de manœuvre (8).

Application à la surveillance et à la facturation du chauffage de chaque appartement.

EP 0 115 716 A1

La présente invention concerne un robinet de réglage manuel, thermostatique ou autres, destiné notamment à équiper les radiateurs d'une installation de chauffage central.

Lorsqu'une installation comporte une source centrale débitant un fluide vers les locaux occupés par un certain nombre d'utilisateurs, il peut être souhaitable de connaître à tout instant, à partir d'un poste central, la position de l'organe de réglage de chaque robinet, en vue par exemple d'en déduire la consommation de chaque utilisateur. C'est le cas notamment pour les installations de chauffage central d'immeubles, afin de connaître en permanence la demande calorifique de chaque appartement.

A cet effet, pour transmettre la position de chaque robinet à un poste central de surveillance, on connait des robinets de réglage qui sont munis d'une résistance électrique variable permettant de faire correspondre à chaque position de l'organe manuel de réglage du robinet, une grandeur mesurable, utilisable à des fins de contrôle par le poste central.

Mais ces robinets connus présentent des inconvénients car ils nécessitent la fabrication et l'implantation dans lesdits robinets d'une résistance variable conçue spécialement, comprenant : - deux éléments conducteurs fixes, - un curseur solidaire de l'organe de réglage et enfin, - un pont conducteur en contact permanent avec les deux éléments conducteurs, ce qui augmente considérablement le prix de revient.

L'invention a donc pour but de fournir un robinet de réglage qui permet de transmettre de façon simple et économique la position de l'organe de réglage à un poste central de surveillance et éventuellement de facturation de chaque utilisateur, tout en utilisant une résistance variable ou potentiomètre standard.

Suivant l'invention, la douille fixe du robinet de réglage se prolonge vers le haut par des pattes verticales qui sont uniformément réparties sur la pourtour de ladite douille et qui supportent la résistance électrique variable actionnée par un organe de commande solidaire du volant de manoeuvre.

Selon une caractéristique particulière de l'invention, l'organe de commande est formé par une roue dentée montée dans un orifice cannelé prévu à la partie supérieure du volant de manoeuvre et comporte un axe vertical dirigé vers le bas qui s'emboîte dans un orifice de la résistance électrique.

D'autres caractéristiques et avantages de l'invention, apparaîtront à la lecture de la description suivante, donnée à titre d'exemple non limitatif et en regard des dessins annexés qui représentent :

- figure 1 : une vue en coupe transversale d'un robinet de réglage thermostatique conforme à l'invention.

- figure 2 : une vue éclatée en coupe transversale montrant le montage de la résistance variable dans la tête thermostatique.

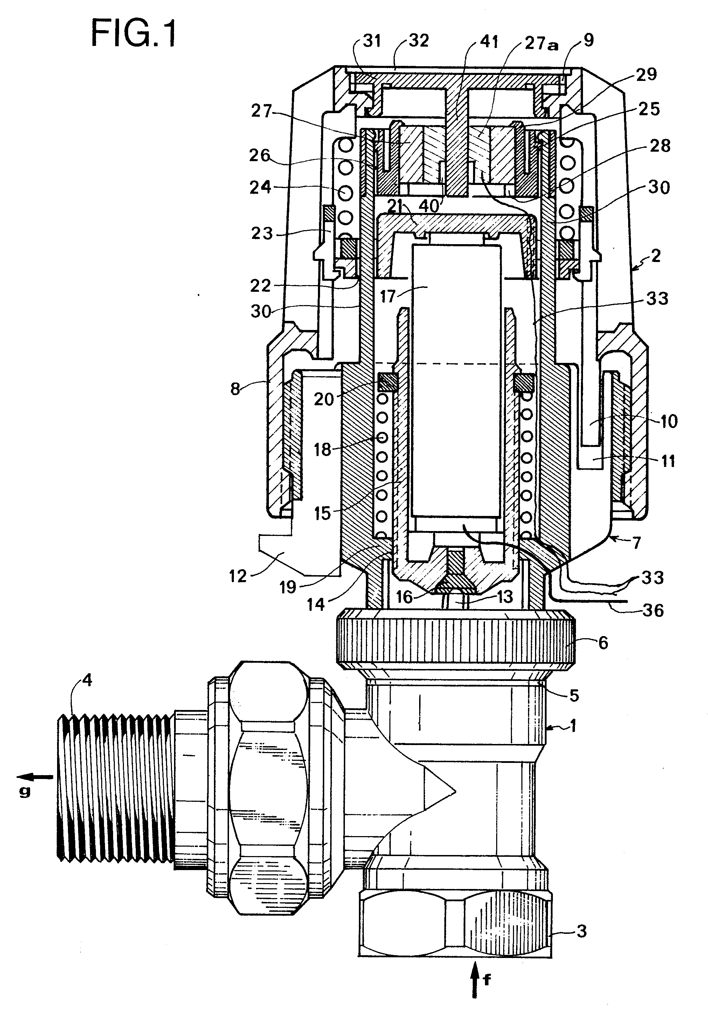

Le robinet thermostatique représenté à la figure 1 se compose d'un raccord 1 en T surmonté d'une tête thermostatique 2.

Le raccord 1 présente une tubulure d'entrée 3 et une tubulure de sortie 4 pour le fluide caloporteur, ce fluide entrant dans le raccord 1 suivant la flèche f et en sortant suivant le flège g. La tête 2 est montée sur l'extrémité de la troisième tubulure 5 du raccord 1 au moyen d'une bague vissée 6 portant des cannelures extérieures.

La tête 2 comporte une douille 7 dont la partie inférieure porte, encliquetée et librement rotative, la bague de montage 6. Sur la douille 7 est vissé un volant de manoeuvre 8 muni de plusieurs repères extérieurs déterminant plusieurs positions de réglage qui correspondent à des positions plus ou moins vissées du volant 8. Ce volant 8 comporte d'une part -à sa partie supérieure un orifice central 9 cannelé, et d'autre part - , intérieurement une butée 10 s'engageant dans une gorge circulaire 11 prévu à l'intérieur de la douille 7. Dans cette gorge 11, on peut également introduire des goupilles dites amovibles 12 qui limitent la rotation du volant de manoeuvre par l'intermédiaire de la butée 10 et imposent une valeur minimum et maximum de consigne. La douille 7 se prolonge vers le haut par des pattes verticales 30 uniformément réparties sur le pourtour circulaire de ladite douille et qui débouchent à proximité de l'orifice central 9 du volant de manoeuvre 8.

L'extrémité supérieure de la tige 13 de commande d'une soupape, non représentée, disposée à l'intérieur du raccord 1 et déterminant le débit de fluide caloporteur à travers ce raccord 1 débouche au-dessus de la tubulure 5 et de la bague 6. La tige 13 est rappelée vers le haut, c'est-à-dire vers la position d'ouverture maximale de la soupape, par un ressort hélicoïdal, non représenté, disposé à l'intérieur du raccord 1.

La douille 7 reçoit dans un alésage central inférieur 14, un piston creux 15 à la partie inférieure duquel se trouve un insert 16 qui est en appui permanent contre l'extrémité de la tige 13 de soupape. A l'intérieur du piston creux 15 est placé un soufflet cylindrique 17 d'un élément thermosensible qui d'un côté est en appui dans le fond dudit piston et qui de l'autre côté déborde au-dessus du rebord supérieur de ce piston 15. L'ensemble piston creux 15-soufflet 17 est rappelé vers le haut par un ressort hélicoïdal 18 relativement faible, comprimé entre un épaulement intérieur 19 formant également l'alésage central 14 de la douille 7 et un
clips 20 rapportée à l'extérieur du piston creux 15.

Une butée 21 en forme de chapeau coulisse sur les pattes
verticales 30 de la douille 7 par l'intermédiaire d'orifices de guidage 22 de façon à coiffer l'extrémité supérieure du soufflet 17. Cette butée 21 est également
maintenue en position par une bague 23 qui coïnce sa
bordure extérieure et qui glisse à l'intérieur du volant
de manoeuvre 8. L'ensemble : -bague 23-butée 21- est
rappelé vers le bas par un ressort hélicoïdal 24 relativement fort, comprimé entre la bague 23 et le volant de
manoeuvre 8.

Un support creux 25 comportant des lumières de positionnement 26 est encliqueté sur les extrémités des pattes 30
dans le prolongement de l'orifice central 9 du volant 8.
A l'intérieur de ce support est monté une résistance électrique variable ou potentiomètre 27 maintenu en position
par des nervures 28 à la base du support et des petites
languettes verticales 29 formant ressort.

La résistance 27 comporte une partie centrale pivotante
27a munie d'un orifice 40 pour le passage d'un axe vertical 41 solidaire d'une roue dentée 31 qui vient s'encliqueter dans l'orifice central 9 cannelé du volant de manoeuvre 8. La roue dentée 31 solidaire en rotation du
volant 8 par l'intermédiaire des cannelures prévues à
l'intérieur de l'orifice central 9 et des dents à l'extérieur de ladite roue commande, par l'axe vertical 29, la
partie pivotante 27a du potentiomètre 27 de façon à modifier sa résistance. De plus, la roue dentée 31 est coiffée par un capuchon 32 indémontable pour empêcher l'utilisateur de modifier la position de cette roue par rapport
au potentiomètre 27.

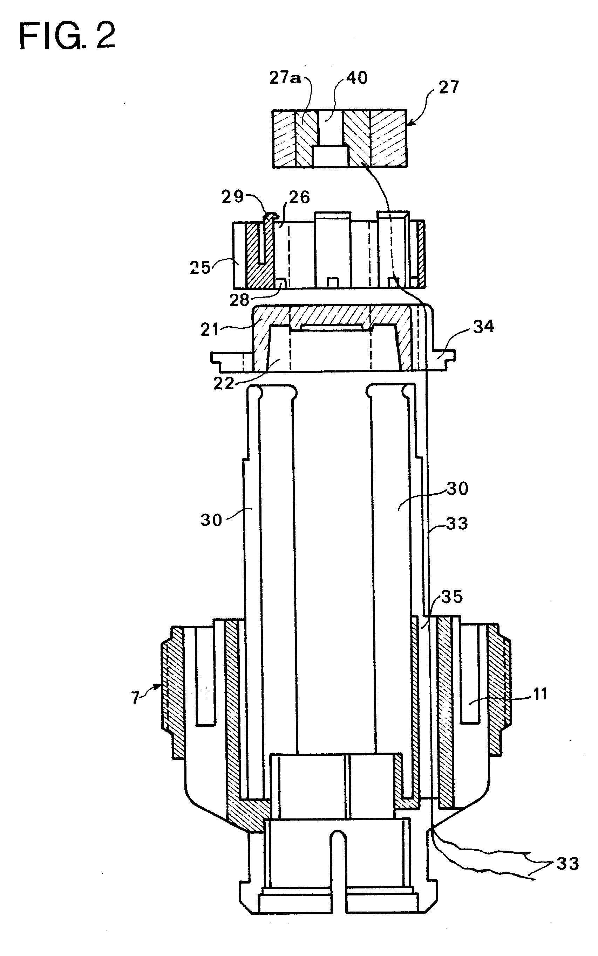

Les fils électriques 33 de liaison entre la résistance 27 et un poste central de contrôle, non représenté, passent dans une encoche 34 (figure 2) prévue à la périphérie de la butée 21, puis dans un canal 35 à l'intérieur de la douille 7 et enfin débouchent à la partie inférieure de la tête 2.

Le soufflet 17 peut être relié à une sonde à distance par un tube capillaire 36 qui débouche également à la partie inférieure de la tête 2.

Ainsi le robinet thermostatique est équipé d'un potentiomètre qui fait correspondre à chaque position du volant de manoeuvre 8, et donc à chaque température du local, une valeur de grandeur mesurable, en l'occurence une valeur de résistance électrique.

Le robinet ainsi décrit est utilisé en pratique dans une installation de chauffage central d'un immeuble ; par exemple cet immeuble comporte un certain nombre d'appartements ayant chacun plusieurs pièces, et chaque pièce est chauffée par un radiateur équipé d'un tel robinet thermostatique. Le poste central peut alors contrôler à tout instant et/ou facturer de façon précise et équitable le chauffage de chaque appartement. Le fait que la consommation soit convertie en une résistance électrique permet un transfert facile des données vers le poste et des calculs simples.

Enfin, cette réalisation particulière permet l'utilisation de potentiomètres tout-à-fait classiques et standards ce qui diminue considérablement le prix de revient.

Revendications.

1. Robinet de réglage, notamment pour radiateurs d'une installation de chauffage central comportant un volant de manoeuvre monté sur une douille fixe à l'intérieur de laquelle est placé un piston creux renfermant un soufflet cylindrique d'un élément thermosensible et une résistance électrique raccordée par des fils à un poste central de contrôle, résistance variable en fonction de la position du volant de manoeuvre caractérisé par le fait que la douille fixe (7) se prolonge vers le haut par des pattes verticales (30) qui sont uniformément réparties sur le pourtour de ladite douille et qui supportent la résistance électrique variable (27) actionnée par un organe de commande solidaire du volant de manoeuvre (8).

2. Robinet de réglage selon la revendication 1 caractérisé par le fait que l'organe de commande est formé par une roue dentée (31) montée dans un orifice cannelé (9) prévu à la partie supérieure du volant de manoeuvre (8) et comporte un axe vertical (41) dirigé vers le bas qui s'emboîte dans un orifice (40) de la résistance électrique (27).

3. Robinet de réglage selon la revendication 1 caractérisé par le fait que la résistance électrique (27) est montée dans un support creux (25) comportant des lumières de positionnement (26) qui viennent s'encliqueter sur les extrémités supérieures des pattes verticales (30).

4. Robinet de réglage selon la revendication 3 caractérisé par le fait que la résistance électrique (27) est maintenue dans le support (25) par des petites nervures (28) et par des petites languettes verticales (29) formant ressort.

5. Robinet de réglage selon la revendication 1 caractérisé par le fait que sur les pattes verticales (30) de la

0115716

douille (7), coulisse -au-dessus du support creux (25)-, une butée (21) en forme de chapeau qui coiffe l'extrémité supérieure du soufflet (17).

6. Robinet de réglage selon la revendication 5 caractérisé par le fait que la butée (21) est également guidée par une bague (23) glissant à l'intérieur du volant de manoeuvre (8).

7. Robinet de réglage selon les revendications 5 et 6 caractérisé par le fait que la butée (21) et la bague (23) sont rappelées vers le bas par un ressort hélicoïdal (24) relativement fort, comprimé entre ladite bague (23) et le volant de manoeuvre (8).

8. Robinet de réglage selon la revendication 1 caractérisé par le fait que les fils électriques (33) de liaison, entre la résistance (27) et le poste central de contrôle, passent dans une encoche (34) prévue à la périphérie de la butée (21), puis dans un canal (35) à l'intérieur de la douille (7) et débouchent à la partie inférieure du robinet de réglage.

9. Robinet de réglage selon la revendication 2 caractérisé par le fait que la roue dentée (31) est coiffée par un capuchon(32)indémontable.

0115716

FIG.1

0115716

# FIG. 2

# Office européen des brevets

## RAPPORT DE RECHERCHE EUROPEENNE

EP 83 40 2313

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 414 162 (K. LENZ et al.) * page 1, ligne 39 - page 2, ligne 23 * | 1 | G 05 D 23/12 |
| A | FR-A-1 487 225 (BLANC) * en entier * | 1 | |
| A | EP-A-0 044 904 (WELLA) * figure 1 * | 1 | |

**DOMAINES TECHNIQUES RECHERCHES (Int. Cl. ³)**

G 05 D

Le présent rapport de recherche a été établi pour toutes les revendications

| Lieu de la recherche | Date d'achèvement de la recherche | Examinateur |
|---|---|---|
| LA HAYE | 12-03-1984 | HOUILLON J.C.P.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

BAD ORIGINAL